# EUROPEAN PATENT SPECIFICATION

(11) **EP 0 779 018 B1**
(45) Date of publication and mention of the grant of the patent: **04.07.2001**
(21) Application number: 96610048.9
(22) Date of filing: 12.12.1996
(51) Int. Cl.: A01B 59/06, A01D 67/00

(54) **A lift suspended agricultural implement with a frame for connection with the three-point lift of a mower**
Schlepper aufgehängenes landwirtschaftliche Werkzeug mit einem Rahmen zür Verbindung mit der Dreipunktvorrichtung
Outil argricole attelé sur tracteur avec un chassis pour la connexion ou dispositif trois-points

(30) Priority: 15.12.1995 DK 142495
(43) Date of publication of application: 18.06.1997
(73) Proprietor: JF-Fabriken - J. Freudendahl A/S, 6400 Sonderborg (DK)
(72) Inventor: Freudendahl, Jorn, 6400 Sonderborg (DK); Nielsen, Harald Raun, Horuphav, 6470 Sydals (DK)
(74) Representative: Indahl, Peter Jensen

(56) References cited:
- EP-A- 0 514 314
- DE-A- 1 757 238
- DE-A- 1 757 916
- FR-A- 1 566 398
- GB-A- 2 056 248

## Description

The present invention relates to a lift-suspended agricultural implement with a frame for connection with the carrier arms and the top link of the three-point lift of a tractor, the frame comprising a hole for receiving a tap which is horizontal and transverse relative to the top link for connecting the top link and the frame.

Such lift-suspended agricultural implements are well known, for instance from EP-A-0 514 314, which relates to a mower suspended in an arm which is hinged to the frame at one side to swing between a working position, in which the mower is positioned outside the track of the tractor, and a transport position in which the mower is positioned within the track of the tractor, the arm carrying the implement being swung to a position, in which it extends parallel with the longitudinal direction of the tractor.

Another lift-suspended agricultural implement is also known for example in GB-A-2056248.

There is a problem with such lift-suspended agricultural implements when they are to be disconnected from a tractor, viz. that the disconnection of the normally longitudinally adjustable top link is made difficult on account of pressure or pull in the top link and subsequently a frictional engagement between the tap and the hole in the frame which makes impedes or prevents pulling out the tap from the hole for disconnecting the top link from the frame. The object of the invention is to avoid this problem.

This object is met according to the invention in that the hole in the frame has bigger dimensions than the diameter of the tap, the hole having a first, substantially straight side facing the top link and extending upwards and having an upper end and lower end, and a second side extending away from the lower end of the first side, whereby a corner is created between the two sides, and whereby the first side extends under such an angle that the tap during operation will rest in said corner, an obtuse angle being created between the top link and the first side, and in that the angle, when the carrier arms and thus the implement are lowered, becomes acute.

Hereby is obtained that the tap in working position gets to rest in the corner between said two sides and remains there, because during operation there is always a pull in the top link on account of the positioning of the centre of gravity of the implement relative to the frame. When the carrier arms and thus the implement are lowered, the angle between the first side of the hole and the top link is reduced, because the implement is lowered substantially translational, while the top link journals around its hinge point on the tractor. At one time the angle will become acute, and the tap will then, if there is a pull in the top link, tend to move upwards in the hole, whereby the distance between the closest part of the first side of the hole and the hinge point of the top link on the tractor is reduced, which in turn means that the force engagement between the tap and the hole is released. If, prior to the time in question the pull in the top link is replaced by a pressure, the tap will move along the second side away from the first side, and the frictional engagement between the tap and the hole will also in this case be released. It is then easy to detach the tap from the hole.

The invention will be explained in detail in the following by means of an example of an embodiment with reference to the drawing, in which
Fig. 1 shows an implement which has just been connected with the three-point lift of a tractor, and
Fig. 2 the same implement during disconnection from the tractor.

In the figures the rear end of a tractor 1 is seen, said tractor having two carrier arms 2, of which only the closest one can be seen, whereas the second one is hidden behind it, and a top link 3. The carrier arms 2 and the top link 3 constitute together the three-point lift of the tractor 1.

Furthermore, a mower 4 of a type known per se is shown, said mower being by means of a hinge 5 suspended in an arm 6 which through another hinge 7 is connected with a frame 8 adapted to be connected with the three-point lift. The frame 8 is moreover provided with supporting legs 9 which carry the frame 8 when the implement is not connected with a tractor.

The carrier arms 2 may in the usual way be swung around a horizontal axis 10 by means of the hydraulic system of the tractor or in a similar way to lift or lower a lift-suspended implement. Moreover, the top link 3 is in a manner known per se longitudinally adjustable, as it comprises two threaded portions with mutually inverse threads which are connected with a pipe section 12 with internal thread and a handle 13. The top link 3 may swing freely around a hinge 14.

The frame 8 is connected with the carrier arms 2 by means of taps 15 and to the top link 3 by means of a tap 16 which is received in a hole 17 in the frame 8.

The design of the hole 17 is the subject of the present invention, and as appears from the drawing, the hole 17 has a first side 18 extending upwards and a second side 19 extending away from the lower end of the first side 18 thus forming a corner 20. The dimensions of the hole 17 are as appears from the drawing substantially bigger than the diameter of the tap 16.

The exact orientation of the two sides 18, 19 of the hole depends on a number of parameters like: the desired height positioning of the hole 17 during operation, the inclination of the frame 8 and the desired possibility of varying same during operation and the height of the hinge 14 of the top link 13 on the tractor. As appears from this, the exact orientation of the two sides 18, 19 depends both on the constructional design of the implement and on certain dimensions at a tractor, on which the implement is to be suspended. It is therefore not possible here to give an exact positioning, but the person skilled in the art will on basis of the explanation of the function of the hole 17 following below understand, how the two sides are to be oriented in a given construction.

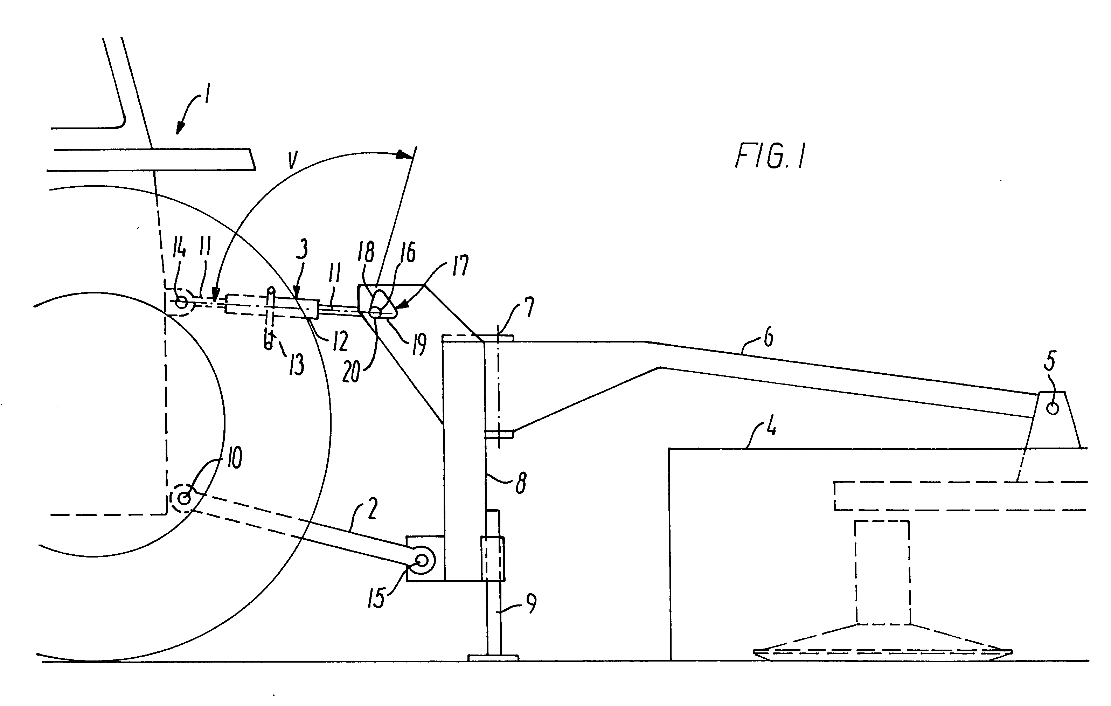

Fig. 1 shows the implement in parked position, i.e. the frame 8 is carried by the supporting leg 9 and the mower 4 itself rests on the ground possibly on supporting legs not shown.

The frame 8 has been connected with the three-point lift, the length of the top link 3 has been shortened by turning of the pipe section 12 and the tap 16 rests in the corner 20. The implement can now be lifted by means of the carrier arms 2 and the supporting leg 9 is raised, following which the implement is ready for operation.

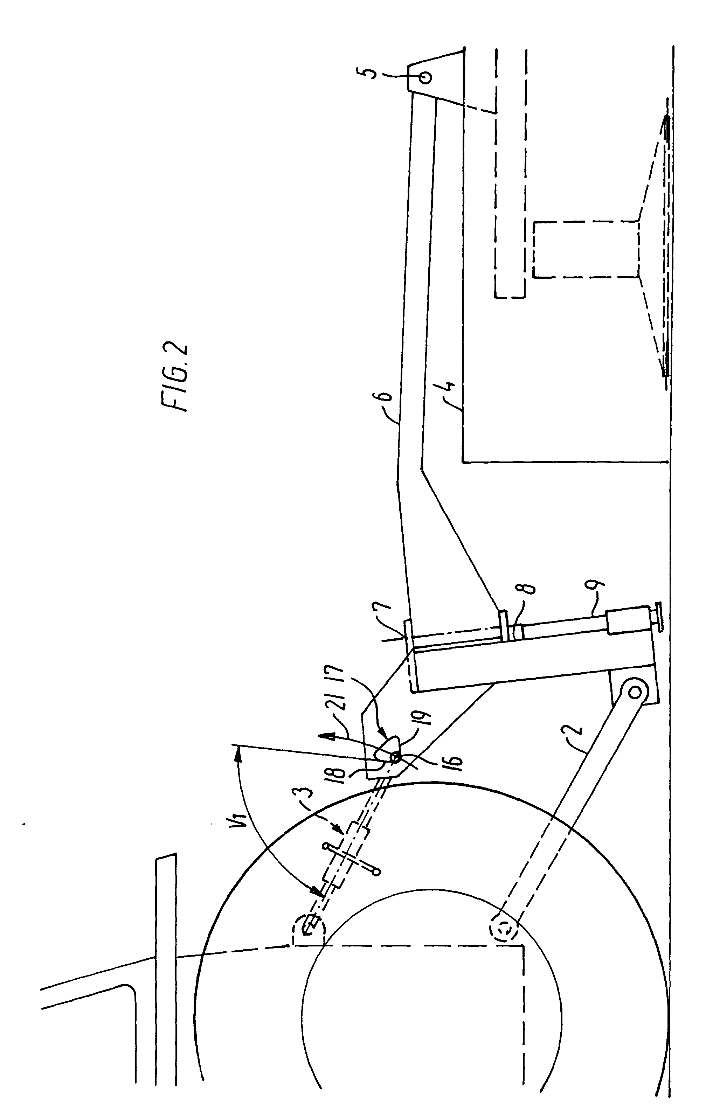

During operation there may be a need to change the inclination of the frame 8 in order to change the angle of the mower 4 relative to the ground and subsequently the stub height. It is furthermore possible to leave the implement after use in a different place than the place in which it was connected with the tractor as shown in Fig. 1. The possibility of the top link 3 not having a suitable length relative to the parking position shown in Fig. 1 exists in any case. In respect of conventional implements with a hole for the tap 16 which substantially corresponds to its diameter, this will mean that there is a pressure or a pull in the top link 3, which impedes the disconnection. With a hole 17 according to the present invention the implement is lowered, when it is to be disconnected, firstly until the mower 4 rests on the ground and then further on, whereby the frame 8 is lowered and the angle between the top link 3 and the front side 18 of the hole 17 is reduced. Sooner or later the angle will become smaller than 90° and the top link may then be swung upwards as shown by the arrow 21 in Fig. 2, whereby the tap 16 is free of the sides of the hole 17.

In the situation shown in Fig. 2 the top link 3 is shortened in comparison with the position shown in Fig. 1, which appears from the fact that the tap 16 has remained in the corner 20 until the angle has become smaller than 90°. If the top link 3 had been extended, it would in the situation shown in Fig. 2 have pushed the tap 16 away from the first side 18 of the hole 17.

When the tap 16 has got out of engagement with the sides of the hole 17, the top link 3 is easy to disconnect, following which the frame 8 is raised by means of the carrier arms 2, the supporting leg 9 is lowered and the frame 8 is lowered until it is carried by the supporting leg 9, whereafter the carrier arms 2 may be detached from the frame 8.

## Claims

1. A lift-suspended agricultural implement with a frame (8) for connection with the carrier arms (2) and the top link (3) of the three-point lift of a tractor, the frame (8) comprising a hole (17) for receiving a tap (16) which is horizontal and transverse relative to the top link (3) for connecting the top link (3) and the frame (8), wherein during operation there is always a pull in the top link on account of the positioning of the centre of gravity of the implement relative to the frame, **characterized** in that the hole (17) in the frame (8) has bigger dimensions than the diameter of the tap (16), the hole (17) having a first, substantially straight side (18) facing the top link (3) and extending upwards and having an upper end and lower end, and a second side (19) extending away from the lower end of the first side (18), whereby a corner (20) is created between the two sides, and whereby the first side (18) extends under such an angle that the tap (16) during operation will rest in said corner (20), an obtuse angle being created between the top link (3) and the first side (18), and in that the angle, when the carrier arms (2) and thus the implement are lowered, becomes acute.

## Patentansprüche

1. Schlepper-aufgehängtes landwirtschaftliches Gerät mit einem Rahmen (8) zur Verbindung mit den Tragarmen (2) und der oberen Stange (3) der Dreipunkt-Aufhängung eines Schleppers, welcher Rahmen (8) ein Loch (17) zur Aufnahme eines im Verhältnis zur oberen Stange (3) waagrechten und quergehenden Zapfens (16) zwecks Verbinden der oberen Stange (3) mit dem Rahmen (8) umfasst, wobei unter Betrieb aufgrund der Lage des Schwerkraftzentrums des Geräts gegenüber dem Rahmen immer ein Ziehen in der oberen Stange stattfindet, dadurch **gekennzeichnet**, dass das Loch (17) im Rahmen (8) grössere Dimensionen aufweist als der Durchmesser des Zapfens (16), und das Loch eine erste, der oberen Stange (3) zuwendende, im wesentlichen gerade Seite (18) hat, die nach oben verläuft und ein oberes und ein unteres Ende aufweist, und eine zweite Seite (19), die weg vom unteren Ende der ersten Seite (18) verläuft, wodurch zwischen den beiden Seiten eine Ecke (20) gebildet wird, wobei sich die erste Seite (18) unter einem solchen Winkel erstreckt, dass während des Betriebes der Zapfen (16) in erwähnter Ecke (20) gelagert ist, und ein stumpfer Winkel zwischen der oberen Stange (3) und der ersten Seite (18) gebildet wird, welcher Winkel bei Senken der Tragarme (2) und somit des Gerätes spitz wird.

## Revendications

1. Outil agricole attelé avec un châssis (8) pour la connexion des bras-supports (2) et de la biellette supérieure (3) du dispositif d'attelage trois-points d'un tracteur, châssis (8) qui comprend un trou (17) pour recevoir un tenon (16) qui est arrangé horizontalement et transversalement par rapport à la biellette supérieure (3) pour relier la biellette supérieure (3) et le châssis (8), où lors de l'opération il y a toujours une traction de la biellette supérieure à cause du positionnement du centre de gravitation de l'outil par rapport au châssis, **caractérisé** en ce que le trou (17) dans le châssis (8) présente des dimensions plus grandes que le diamètre du tenon (16), le trou (17) présentant un premier côté essentiellement droit (18) en face de la biellette supérieure (3) et s'étendant vers le haut et présentant un bout supérieure et un bout inférieure, et un deuxième côté (19) s'étendant loin du bout inférieur du premier côté (18), un coin (29) étant ainsi créé entre les deux côtés, et le premier côté (18) s'étendant sous un tel angle que lors de l'opération, le tenon (16) reste logé dans ledit coin (20), un angle obtus étant créé entre la biellette supérieure (3) et le premier côté (18), et en ce que lorsque les bras-supports (2) et ainsi l'outil sont baissés, l'angle devient aigu.
